**Europäisches Patentamt**

**European Patent Office**

**Office européen des brevets**

(19)

(11) Numéro de publication: **0 088 654**

**B1**

(12) # FASCICULE DE BREVET EUROPÉEN

(45) Date de publication du fascicule du brevet:
23.07.86

(21) Numéro de dépôt: **83400333.7**

(22) Date de dépôt: **16.02.83**

(51) Int. Cl.⁴: **B 62 D 5/04**

(54) Dispositif d'assistance de direction pour véhicule automobile.

(30) Priorité: **04.03.82 FR 8203584**

(43) Date de publication de la demande:
**14.09.83 Bulletin 83/37**

(45) Mention de la délivrance du brevet:
**23.07.86 Bulletin 86/30**

(84) Etats contractants désignés:
**DE GB IT SE**

(56) Documents cité:
**EP-A-0 077 696**
**FR-A-1 595 813**
**FR-A-2 251 189**
**FR-A-2 442 476**

(73) Titulaire: **ACIERS ET OUTILLAGE PEUGEOT**
**Société dite:, F-25400 Audincourt (Doubs) (FR)**

(72) Inventeur: **Bertot, Maurice Marcel, 69 bis Rue de**
**Belfort, F-25200 Montbeliard (FR)**

(74) Mandataire: **Moncheny, Michel, c/o Cabinet**
**Lavoix 2 Place d'Estienne d'Orves, F-75441 Paris**
**Cedex 09 (FR)**

EP 0 088 654 B1

## Description

La présente invention concerne un dispositif d'assistance de direction comportant un accouplement mécanique destiné à être interposé entre la colonne de direction et le volant, un détecteur du couple exercé sur le volant, et un moteur électrique d'assistance qui peut être branché en série sur une source d'alimentation par l'intermédiaire d'un inverseur marche-arrêt autorisant sélectivement les deux sens de marche du moteur, l'inverseur étant commandé par le détecteur lorsque ledit couple dépasse une première valeur prédéterminée et l'accouplement provoquant le couplage du moteur à la colonne de direction lorsque le couple excède une seconde valeur prédéterminée (un tel dispositif est décrit dans FR-A-2442476). Un tel dispositif, comprenant en outre un organe commandé d'interruption de courant qui est monté en parallèle sur une résistance dans le circuit du moteur, qui est connecté pour présenter un retard à l'ouverture et une fermeture immédiate et qui est commandé par un détecteur du courant circulant dans le circuit du moteur, est décrit dans la demande EP-A-0077696 publiée le 27.04.83.

Ce dispositif d'assistance de direction comporte de préférence des bobines de commande par l'intermédiaire desquels l'inverseur marche-arrêt est placé dans chacune de ses positions respectives, chaque bobine étant associée à un sens de marche prédéterminé du moteur électrique d'assistance.

D'une façon générale, on sait que les relais électromagnétiques sont excités lorsqu'une certaine tension prédéterminée est appliquée aux bornes de leur bobine d'excitation et qu'une fois excité, ils retombent pour une tension sur la bobine plus faible.

Les relais ordinaires que l'on trouve couramment dans le commerce, ont des valeurs de tension d'excitation et de retombée qui se situent à l'intérieur d'une plage de tolérances relativement larges pouvant aller jusqu'à 10% de la tension nominale correspondante.

Dans la plupart des cas, ces tolérances sont facilement supportées dans les montages de commande des relais, car on les actionne le plus souvent par la présence ou l'absence de la totalité de la tension qui alimente leur bobine, cette tension étant choisie à une valeur qui est au moins égale à la tension la plus élevée d'excitation à laquelle on peut s'attendre en moyenne dans un lot de relais.

Si la tension d'alimentation du montage ne varie pas dans des proportions importantes, tout relais du lot sera excité lorsqu'il est commandé et lors de la fabrication du montage on n'aura donc à opérer aucun tri des relais.

Cependant, dans certains montages et notamment celui d'un dispositif d'assistance de direction du type décrit ci-dessus, la tension d'alimentation (qui est celui du système électrique du véhicule), peut varier dans des proportions importantes en fonction notamment de l'état de la batterie et du nombre de charges branchées sur le système électrique.

Si, dans ces conditions, on veututiliser un dispositif d'assistance de direction fonctionnant pour toutes les valeurs que risque de prendre la tension du réseau du véhicule, il faut nécessairement choisir des relais qui fonctionnent encore de façon certaine pour la plus faible valeur que pourra prendre cette tension, sinon le conducteur du véhicule pourrait rencontrer des situations dans lesquelles l'un ou l'autre sens de la direction serait assisté (la tension d'alimentation correspondant encore à la tension d'excitation du relais correspondant) tandis que l'autre sens ne le serait plus, le relais correspondant n'étant plus excité par la tension d'alimentation devenue trop faible. Une telle situation serait évidemment extrêmement dangereuse. Le constructeur du circuit doit donc soit faire un tri parmi les relais d'un lot du commerce pour en trouver qui possèdent la même tension d'excitation, soit mettre au point des relais fabriqués avec des tolérances très serrées. L'une et l'autre solutions impliquent une augmentation notable du coût du dispositif d'assistance de direction.

La présente invention a pour but de perfectionner le dispositif d'assistance de direction décrit ci-dessus de telle manière qu'il puisse fonctionner en toute sécurité avec des relais ordinaires du commerce choisis indifféremment dans un lot de relais.

L'invention a donc pour objet un dispositif d'assistance de direction comportant un accouplement mécanique destiné à être interposé entre la colonne de direction et le volant, un détecteur du couple exercé sur le volant, et un moteur électrique d'assistance qui peut être branché en série sur une source d'alimentation par l'intermédiaire d'un inverseur marche-arrêt autorisant sélectivement les deux sens de marche du moteur, l'inverseur étant commandé par le détecteur lorsque ledit couple dépasse une première valeur prédéterminée et l'accouplement provoquant le couplage du moteur à la colonne de direction lorsque ledit couple excède une seconde valeur prédéterminée (comme connu de FR.A. 2442476), ce dispositif étant caractérisé en ce qu'il comprend en outre un organe commandé d'interruption de courant qui est monté en parallèle sur une résistance dans le circuit du moteur, qui est connecté pour présenter un retard à l'ouverture et une fermeture immédiate et qui est commandé par un détecteur du courant circulant dans le circuit du moteur, ledit inverseur marche-arrêt étant commande par ledit déteur par l'intermédiaire de deux bobines de relais affectées respectivement à l'un des sens de marche du moteur, et en ce que lesdites bobines de relais sont reliées à un composant semi-conducteur dont l'électrode de commande est reliée à un circuit destiné à comparer la tension d'alimentation du dispositif à une tension de référence prédéterminée et qui interdit l'excitation de ces bobines lorsque la tension d'alimentation descend à une valeur inférieure à ladite tension de référence.

Il résulte de ces caractéristiques que pour une tension d'alimentation du montage correspondant à peu près à la valeur la plus faible de la plage de tolérances des relais, le dispositif d'assistance de direction est inhibé de sorte que le conducteur du véhicule ne dispose plus de l'assistance et ne peut jamais être confronté à une situation dans laquelle seul l'un des sens de direction soit assisté.

L'invention est exposée ci-après plus en détail à l'aide de dessin représentant seulement un mode d'exécution, sur lequel:

- la Fig. Unique représente un schéma d'un exemple de réalisation du dispositif d'assistance de direction suivant l'invention.

Suivant le mode de réalisation préféré de l'invention représenté, on voit que le dispositif d'assistance comporte un moteur M pouvant être embrayé sur la colonne de direction (non représentée) par un mécanisme réagissant en fonction du couple qui est appliqué au volant (également non représenté) à partir d'une certaine valeur de ce couple. On peut trouver une description détaillée d'un tel mécanisme dans le FR-A-2 442 476.

Le moteur est connecté dans un circuit série raccordé entre la borne positive 1 de la batterie du véhicule et une ligne de masse 2 par l'intermédiaire de deux inverseurs 3 et 4 qui peuvent sélectivement appliquer la tension d'alimentation aux bornes du moteur M, l'inverseur 3 étant, par exemple, affecté à la marche du moteur lorsque le volant est tourné vers la droite et l'inverseur 4 correspondant au cas contraire. Les inverseurs 3 et 4 sont respectivement commandés par des bobines de relais 5 et 6 pouvant être mis en circuit par un capteur 7 qui est monté entre le volant générateur du couple manuel, c'est-à-dire la colonne de direction et la partie mécanique chargée d'ajouter un couple additif par le moteur M, et dont les contacts fixes 7a et 7b sont affectés respectivement au sens droite et gauche du volant en étant fermés lorsque le couple exercé sur le volant dépasse une première valeur prédéterminée. Il est à noter que lorsque ce couple dépasse une seconde valeur prédéterminée supérieure à la première, le moteur est embrayée sur la colonne de direction pour assurer l'assistance de direction, de telle sorte que dès que le volant est actionné, le moteur M est tout d'abord mis en marche avant qu'il puisse être embrayé sur la colonne de direction.

Le circuit série du moteur M comprend en outre un enroulement 8 d'un détecteur de courant 9 ainsi qu'un contact de repos 10 d'un relais de commande dont la bobine 11 sera décrite par la suite. Le contact de repos 10 est raccordé en parallèle à une résistance chutrice 12 qui est donc mise dans le circuit du moteur lorsque le contact 10 est ouvert.

Le capteur de Hall 17 du détecteur 9 présente une sortie 19 qui est raccordée à deux résistances en série 20 et 21 reliées par l'intermédiaire d'une résistance 40 et d'une diode 22 branchée dans le sens du blocage à une borne d'alimentation 23 qui est destinée à être raccordée à la borne positive de la clé de contact du véhicule. Cette borne 23 alimente également les bobines de relais 5 et 6 par l'intermédiaire du capteur 7 et d'une diode 41.

Le point de jonction des résistances 20 et 21 est relié à la base d'un transistor 24 dont l'émetteur est relié à la jonction entre les résistances 21 et 40 et dont le collecteur est connecté à la ligne de masse 2 par l'intermédiaire d'une résistance 25 et d'un condensateur 26. La jonction entre ces deux derniers composants est branchée à l'anode d'une diode 27 dont la cathode est raccordée par une résistance 28 à la base d'un transistor 29 dont le circuit de sortie est connecté dans le circuit de la bobine 11 entre la diode 22 et la ligne de masse 2.

Le circuit que l'on vient de décrire constitue un montage à retard qui associe au contact de repos 10 une fonction de retard à l'ouverture par l'intermédiaire de la bobine de relais 11.

Une diode 38 est montée en parallèle sur la bobine 11 du relais commandant le contact 10, tandis qu'un Varistor 39 (résistance à l'oxyde de zinc dont la valeur dépend de la tension de ses bornes) est branché entre la borne 23 et la masse. Ces deux composants sont destinés à protéger le circuit contre les transitoires.

Le contact de repos 10 associé à la bobine 11 est relié en parallèle à deux résistances en série 42 et 43 connectées à la ligne de masse 2, et dont le point de jonction est relié à une diode 44 dont la cathode est connectée à la jonction entre la diode 27 et la résistance 28.

Suivant l'invention, les bobines 5 et 6 sont montées en série sur le trajet collecteur-émetteur d'un transistor d'inhibition 45 dont l'émetteur est relié à la ligne de masse 2 et dont le collecteur est raccordé aux extrémités correspondantes des bobines 5 et 6. Le même point de jonction de ces deux bobines est respectivement relié par des diodes en opposition 46 et 47 aux contacts fixes 7a et 7b du capteur 7.

Les extrémités opposées des bobines 5 et 6 sont reliées par des diodes respectives 48 et 49 à un point de jonction 50 qui est la borne d'entrée d'un montage de commande et de comparaison 51 que l'on va maintenant décrire en détail. Ce montage comporte tout d'abord une section de filtrage 52 qui comprend les composants suivants.

Une résistance 53 est reliée entre l'entrée 50 et à la ligne de masse 2, l'entrée 50 étant également connectée à une résistance 54 elle-même connectée à un condensateur 55 dont l'armature opposée est reliée à la ligne de masse 2. Le point de jonction entre la résistance 54 et le condensateur 55 est connecté à une autre résistance 56 dont l'autre extrémité est connectée à la ligne de masse 2 par un condensateur 57, le point de jonction de cette résistance 56 et ce condensateur 57 étant reliés à l'entrée non inverseuse d'un amplificateur-comparateur 58.

Le montage de filtrage et de commande 51 comporte également un circuit de comparaison 59 dont le composant essentiel est formé par un amplificateur-comparateur 60 L'entrée inverseuse de cet amplificateur-comparateur est reliée au point de jonction 61 de deux résistances 62 et 63 connectées en série entre la résistance 40 et la ligne de masse 2.

L'entrée non-inverseuse de l'amplificateur 60 est reliée tout d'abord à une résistance 64 elle-même connectée au point de jonction 65 d'une résistance 66 reliée par ailleurs à la résistance 40 et d'une diode Zener 67 connectée par ailleurs à la ligne de masse 2 et formant source de tension de référence.

L'entrée non-inverseuse de l'amplificateur 60 est également reliée à une résistance 68 qui reboucle la sortie de cet amplificateur à cette entrée non-inverseuse.

La sortie de l'amplificateur 60 est reliée au point bas d'un diviseur de tension composé de deux resistances 69 et 70, cette dernière étant reliée à la resistance 40. Le point de jonction de ce diviseur de tension est relié à l'entrée inverseuse de l'amplificateur 58.

La sortie de ce dernier est connectée par une résistance 71 à la base du transistor 45 et également par l'intermédiaire d'une diode 72 à l'entrée inverseuse de l'amplificateur 60.

Une diode Zener 73 est destinée à limiter à une valeur acceptable la tension d'alimentation fournie à travers la résistance 40 à la partie correspondante du dispositif d'assistance de direction.

Le fonctionnement du montage représenté sur la Fig. Unique est le suivant.

Lorsqu'un couple est exercé sur le volant de direction, le capteur 7 détecte cette action en fermant l'un ou l'autre des circuits qu'il peut établir, ce qui, dans des conditions normales de fonctionnement, excite la bobine 5 ou 6 correspondante, le courant passant à travers le transistor 45 qui est supposé conducteur dans ces circonstances. Il en résulte l'alimentation du moteur M par l'intermédiaire soit de l'inverseur 3, soit de l'inverseur 4, suivant le sens du couple appliqué.

Le moteur M est protégé contre les sur intensités qui peuvent survenir par exemple, lorsque la direction est sur les butées de fin de course, ou lorsqu'un obstacle empêche l'une des roues de tourner dans le sens souhaité. A cet effet, le détecteur de courant 9 peut exciter la bobine de relais 11 par l'intermédiaire des transistors 24 et 29 ouvrant ainsi le contact 10 et mettant en série avec le moteur la résistance chutrice 12. Cette action de mise en série de la résistance 12 est effectuée avec un certain retard grâce au circuit RC 25, 26 évitant ainsi que le courant de démarrage du moteur M puisse faire réagir le montage.

Des couples mécaniques autres que ceux appliqués par le conducteur du véhicule peuvent être engendrés dans la colonne de direction par exemple lorsque le véhicule roule en ligne droite sur une chaussée de pavés. Dans ces conditions, il peut se produire que ce couple soit intermittent à une fréquence relativement élevée. Dans ce cas, le montage 51 de filtrage et de commande empêche l'excitation des bobines 5 et 6 par l'intermédiaire du transistor 45.

On a supposé ci-dessus que ce dernier est conducteur dans des conditions normales de fonctionnement.

En effet, lorsqu'un couple est excercé sur la colonne de direction pour effectuer un virage sur la gauche ou sur la droite, le contact mobile du capteur 7 est maintenu pendant un certain temps sur le contact 7a ou 7b correspondant. Ce phénomène se prolongeant pendant une certaine durée, le signal correspondant passe à travers le filtre 52 pour provoquer l'application d'un signal sur l'entrée non inverseuse de l'amplificateur 58, de telle sorte que sa sortie passe au niveau haut, appliquant ainsi à travers la résistance 71, une tension sur le transistor 45 qui le rend conducteur et le maintient dans cet état tant que l'action du conducteur sur la colonne de direction se poursuit.

Par contre, si pour une raison quelconque, par exemple, lorsque la chaussée est formée par des pavés, les roues directrices du véhicule subissent des sollicitations irrégulières à une fréquence dépassant la fréquence de coupure du filtre 52, le capteur 7 perçoit des variations de couple rapide qui ne peuvent être transmises par le filtre 52, de sorte que le signal à l'entrée non inverseuse de l'amplificateur 58 n'est pas suffisant pour faire basculer ce dernier. Le transistor 45 n'est alors pas rendu conducteur et la bobine 5 ou 6 ne peut être excitée.

On peut trouver une description détaillée du fonctionnement de cette partie du montage dans la demande de brevet EP-A-0 081 398 au nom de la Demanderesse, publiée le 15.06.83.

La tension de la borne 23 dont la valeur correspond à la tension du réseau électrique du véhicule, est surveillée constamment par le diviseur de tension formé par les résistances 62 et 63. Le point de jonction 61 reflete cette tension et l'applique à l'entrée inverseuse de l'amplificateur 60, dans lequel le signal correspondant est constamment comparé à la tension qui régne au point de jonction 65 entre la résistance 66 et la diode Zener 67, celle-ci maintenant sur le point de jonction 65 une tension constante qui peut être de 5, 6 volts, par exemple.

Tant que la tension au point 61 reste supérieure à celle du point 65, l'amplificateur 60 ne bascule pas et le point de jonction entre les résistances 69 et 70 qui est en réalité l'entrée inverseuse de l'amplificateur 58 est maintenu à un niveau bas de sorte que tout signal provenant du capteur 7 est perçu à la sortie de l'amplificateur 58 et n'empêche nullement la conduction du transistor 45.

Par contre, si la tension au point de jonction 61 devient égale ou descend en-dessous de la valeur de la tension au point de jonction 65, l'amplificateur 60 bascule et porte sa sortie au niveau haut, si bien que le point de jonction entre les résistances 69 et 70 est porté au potentiel positif régnant à l'extrémité correspondante de la résistance 40. Il en résulte que l'amplificateur 58 basqule et sa sortie est portée au niveau bas, ce qui bloque le transistor 45 empêchant ainsi l'excitation des bobines 5 et 6. En d'autres termes, lorsque la tension du réseau du véhicule diminue au-delà d'une limite fixée par la diode 67, l'assistance de direction est inhibée.

Si entre-temps, la tension d'alimentation remonte à une valeur plus acceptable, le circuit est réarmé et le transistor 45 de nouveau rendu conducteur, mais la valeur de la tension d'alimentation doit alors être supérieure à celle qu'elle avait au moment où le circuit a été inhibé par suite de l'effet d'hystérésis introduit par les résistances 64 et 68 associées à l'amplificateur 60.

On voit donc que pour toute tension d'alimentation inférieure à une valeur déterminée qui dépend de la tension Zener de la diode 67, l'excitation des bobines 5 et 6 est empêchée. Il convient donc de choisir avec soin la tension de Zener de la diode 67 qui doit être déterminée de telle façon que les bobines 5 et 6 soient coupées pour une tension d'alimentation au moins égale à la valeur haute de la plage de tolérance avec laquelle les bobines 5 et 6 (associées aux inverseurs 3 et 4) sont mises au point.

On va maintenant expliquer le fonctionnement de la diode 72 qui joue un rôle particulier dans le montage suivant l'invention.

En effet, lorsque la tension d'alimentation descend à une valeur proche de valeur de coupure du transistor 45, il peut se produire un phénomène de pompage de l'ensemble du montage pour la raison suivante.

Lorsque dans ces conditions, le capteur détecte un couple sur le volant de direction, (action supposée non périodique), le moteur M est normalement excité. Cependant, comme ce moteur présente pour le réseau de véhicule une charge relativement élevée, la tension d'alimentation qui est déjà faible descend encore davantage par suite de cette charge, ce qui normalement, couperait le transistor 45, si la tension d'alimentation descendait en-dessous de la valeur prédéterminée correspondant à la tension de Zener de la diode 67. Le moteur est alors coupé et de même coup, la tension d'alimentation peut remonter au-dessus de la valeur prédéterminée et si le couple est toujours exercé sur la colonne de direction, le moteur va être de nouveau excité, ce qui conduit à une répétition périodique du phénomène.

Or, grâce à la diode 72, ce phénomène de pompage est évité. En effet, dans les conditions de fonctionnement à tension d'alimentation proche de la tension de coupure, si le capteur 7 est actionné, le diviseur constitué par les résistances 62 et 63 est déséquilibré, la diode 72 y transmettant la tension positive régnant à cet instant à la sortie de l'amplificateur 58. Il en résulte que le potentiel du point de jonction 61 est artificiellement augmenté et le moteur M sera donc actionné malgré la baisse de tension et il reste actionné, car l'amplificateur 60 est incapable d'empêcher le basculement de l'amplificateur 58.

Toutefois, la sécurité reste conservée car si la tension d'alimentation venait à baisser trop, le point de jonction 61 descendrait néanmoins en-dessous de la valeur de la tension régnant au point de jonction 65.

L'amplificateur 60 peut alors également inhiber la transmission du signal provenant du capteur 7 vers le transistor 45.

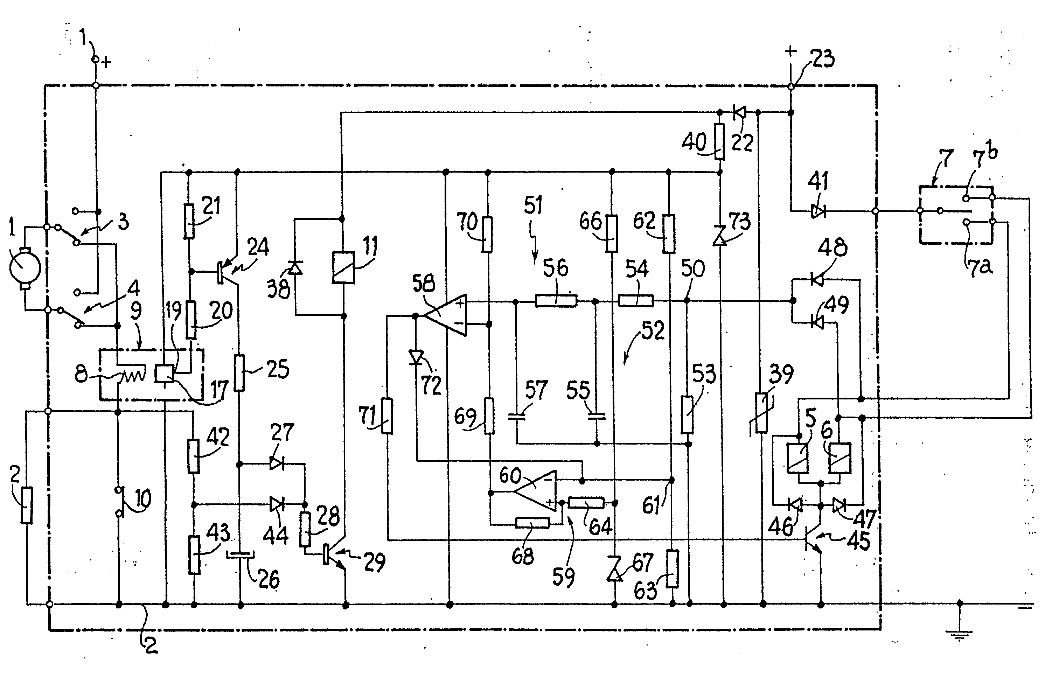

## Revendications

1. Dispositif d'assistance de direction comportant un accouplement mécanique destiné à être interposé entre la colonne de direction et le volant, un détecteur (7) du couple exercé sur le volant, et un moteur électrique d'assistance (M) qui peut être branché en série sur une source d'alimentation (1, 2, 23) par l'intermédiaire d'un inverseur marche-arrêt (3, 4) autorisant sélectivement les deux sens de marche du moteur, ledit inverseur (3, 4) étant commandé par ledit détecteur (7) lorsque ledit couple dépasse une première valeur prédéterminée et ledit accouplement provoquant le couplage du moteur (M) à la colonne de direction lorsque ledit couple excède une seconde valeur prédéterminée, caractérisé en ce qu'il comprend en outre un organe commandé d'interruption de courant (10) qui est monté en parallèle sur une résistance (12) dans le circuit dudit moteur (M), qui est connecté pour présenter un retard à l'ouverture et une fermeture immédiate et qui est commandé par un détecteur (9) du courant circulant dans le circuit du moteur (M), ledit inverseur marche-arrêt (3, 4) étant commandé par ledit détecteur par l'intermédiaire de deux bobines de relais (5, 6) affectées respectivement à l'un des sens de marche du moteur (M), et en ce que lesdites bobines de relais (5, 6) sont reliées à un composant semi-conducteur (45) dont l'électrode de commande est reliée à un circuit (59) destiné à comparer la tension d'alimentation du dispositif à une tension de référence prédéterminée et qui interdit l'excitation de ces bobines (5, 6) lorsque la tension d'alimentation descend à une valeur inférieure à ladite tension de référence.

2. Dispositif suivant la revendication 1, caractérisé en ce que ledit composant semi-conducteur est un transistor (45) dont le circuit collecteur-émetteur est relié en série avec lesdites bobines de relais (5, 6).

3. Dispositif suivant l'une quelconque des revendications 1 et 2, caractérisé en ce que ledit circuit de comparaison (59) comporte une source (66, 67) de tension de référence, un diviseur de tension (60, 62, 63) dont le point de jonction (61) reflète la tension réelle de la source d'alimentation (1, 2, 23), un amplificateur-comparateur (60) dont les entrées sont connectées respectivement à ladite source de tension de référence et audit point de jonction, et des moyens de commande (58, 71) raccordés entre la sortie dudit amplificateur-comparateur (60) et ledit composant semi-conducteur (45) pour inhiber celui-ci et les bobines de relais (5, 6) associées lorsque la tension sur ledit point de jonction descend en-dessous de la tension de référence.

4. Dispositif suivant la revendication 3, caractérisé en ce que ledit amplificateur-comparateur (60) comporte un circuit d'hystérésis destiné à augmenter le potentiel apparent de ladite source de référence (66, 67) lorsqu'après une inhibition dudit composant semi-conducteur (45) par suite d'une baisse de la tension d'alimentation, celle-ci augmente de nouveau.

5. Dispositif suivant la revendication 4, caractérisé en ce ledit circuit d'hystérésis comporte deux résistances (64, 68) dont l'une est reliée entre ladite source de référence et l'entrée correspondante de l'amplificateur comparateur (60) et dont l'autre relie cette entrée à la sortie de ce même amplificateur.

6. Dispositif suivant l'une quelconque des revendications 3 à 5, caractérisé en ce que lesdits moyens de commande (58, 71) comportent un amplificateur (58) dont la sortie est reliée audit composant semi-conducteur (45), dont une première entrée est connectée à la sortie dudit amplificateur-comparateur (60) et dont une autre entrée est reliée de manière à recevoir le signal provenant dudit détecteur de couple, ledit amplificateur-comparateur étant ainsi capable d'inhiber le transfert de ce signal à travers ledit amplificateur, lorsque la tension d'alimentation descend en-dessous d'une valeur inacceptable.

7. Dispositif suivant la revendication 6, caractérisé en ce qu'une diode anti-pompage (72) est reliée à la sortie dudit amplificateur (58) des moyens de commande et le point de jonction (61) dudit diviseur de tension (62, 63).

8. Dispositif suivant l'une quelconque des revendications 6 et 7, caractérisé en ce que ladite autre entrée de l'amplificateur (58) des moyens de commande est reliée au détecteur de couple (7) par l'intermédiaire d'un filtre (52) ne laissant passer que les signaux du detecteur ayant une durée prédéterminée.

## Claims

1. A device for assisting steering comprising a mechanical coupling for interposing between the steering column and the steering wheel, a detector (7) for detecting the torque exerted on the steering wheel and an assisting electric motor (M) which can be connected in series with a supply source (1, 2, 23) through a start-stop reversing switch (3, 4) allowing selectively the two directions of operation of the motor, said reversing switch (3, 4) being actuated by said detector (7) when said torque exceeds a first predetermined value and said coupling causing the coupling of the motor (M) to the steering column when said torque exceeds a second predetermined value, characterized in that it further comprises a controlled means for interrupting current (10) which is connected in parallel with a resistor (12) in the circuit of said motor (M), which is connected for creating a delay in the opening and an immediate closure and which is controlled by d detector (9) of the current in the circuit of the motor (M), said start-stop reversing switch (3, 4) being actuated by said detector through two relay coils (5, 6) respectively allocated to one of the directions of operation of the motor (M), said relay coils (5, 6) being connected to a semi-conductor component (45) whose controlled electrode is connected to a circuit (59) adapted to compare the supply voltage of the device with, a predetermined reference voltage and which prevents the excitation of thesc coils (5, 6) when the supply voltage descends to a value lower than said reference voltage.

2. A device according to claim 1, characterized in that said semi-conductor component is a transistor (45) whose collector-emitter circuit is connected in series with said relay coils (5, 6).

3. A device according to claim 1 or 2, characterized in that said comparison circuit (59) comprises a source (66, 67) of a reference voltage, a voltage divider (60, 62, 63) whose junction point (61) relates to the real voltage of the supply source (1, 2, 23), a comparator-amplifier (60) whose inputs are respectively connected to said source of reference voltage and to said junction point, and control means (58, 71) connected between the output of said comparator amplifier (60) and said semi-conductor component (45) for inhibiting the latter and the associated relay coils (5, 6) when the voltage at said junction point descends below the reference voltage.

4. A device according to claim 3, characterized in that said comparator-amplifier (60) comrises a hysteresis circuit adapted to increase the apparent potential of said reference source (66, 67) when, after an inhibition of said semi-conductor component (45) resulting from a drop in the supply voltage, the latter again increases.

5. A device according to claim 4, characterized said hysteresis circuit comprises two resistors (64, 68) of which one is connected between said reference source and the corresponding input of the comparator-amplifier (60) while the other connects this input to the output of this same amplifier.

6. A device according to any one of the claims 3 to 5, characterized in that said control means (58, 71) comprise an amplifier (58) whose output is connected to said semi-conductor component (45), whose first input is connected to the output of said comparator-amplifier (60) and whose other input is so connected as to receive the signal coming from said torque detector, said comparator-amplifier being consequently capable of inhibiting the transfer of this signal through said amplifier when the supplied voltage descends below an unacceptable value.

7. A device according to claim 6, characterized in that an anti-hunting diode (72) is connected to the output of said amplifier (58) of the control means and to the junction point (61) of said voltage divider (62, 63).

8. A device according to claim 6 or 7, characterized in that said other input of the amplifier (58) of the control means is connected to the torque detector (7) through a filter (52) which allows the passage only of the signals of the detector which have a predetermined duration.

**Patentansprüche**

1. Servolenkung mit einer Kupplung zwischen der Lenksäule und dem Lenkrad, mit einem Geber (7) für das auf das Lenkrad ausgeübte Drehmoment und mit einem elektrischen Servomotor (M), der in Reihe an eine Energiequelle (1, 2, 23) über einen EIN-AUS-Umschalter (3, 4) geschaltet werden kann, der wahlweise die beiden Arbeitsrichtungen des Motors ermöglicht, wobei der Umschalter (3, 4) durch den Geber (7) gesteuert wird, wenn das Drehmoment einen gegebenenersten Wert übersteigt, wobei die Kupplung das Ankuppeln des Motors (M) an die Lenksäule bewirkt, wenn das Drehmoment einen gegebenen zweiten Wert übersteigt,

dadurch gekennzeichnet,

daß sie außerdem ein gesteuertes Stromunterbrechungsorgan (10) aufweist, das parallel zu einem Widerstand (12) der Schaltung des Motors (M) geschaltet ist, das derart geschaltet ist, daß es verzögert öffnet und sofort schließt, und das durch einen Geber (9) für den in der Schaltung des Motors (M) fließenden Strom gesteuert wird, wobei der EIN-AUS-Umschalter (3, 4) vom Geber durch zwei Relaisspulen (5, 6) gesteuert wird, die jeweils einer der beiden Arbeitsrichtungen des Motors (M) zugeordnet sind, und

daß die Relaisspulen (5, 6) an ein Haltleiterbauteil (45) angeschlossen sind, dessen Steuerelektrode an eine Schaltung (59) angeschlossen ist, die zum Vergleichen der Speisespannung der Vorrichtung mit einer gegebenen Bezugsspannung dient und die der Erregung dieser Spulen (5, 6) sperrt, wenn die Speisespannung auf einen Wert abfällt, der kleiner als die Bezugsspannung ist.

2. Vorrichtung nach Anspruch 1,
dadurch gekennzeichnet,
daß das Halbleiterbauteil ein Transistor (45) ist, dessen Kollektor-Emitter-Schaltung in Reihe mit den Relaisspulen (5, 6) geschaltet ist.

3. Vorrichtung nach einem der Ansprüche 1 und 2,

dadurch gekennzeichnet,
daß die Vergleichsschaltung (59) folgendes aufweist: eine Bezugsspannungsquelle (66, 67), einen Spannungsteiler (60, 52, 63), dessen Anschlußpunkt (61) die tatsächliche Spannung der Energiequelle (1, 2, 23) wiedergibt, einen Komparator-Verstärker (60), dessen Eingänge an die Bezugsspannungsquelle bzw. an den Anschlußpunkt angeschlossen sind, und eine Steuereinrichtung (58, 71), die zwischen dem Ausgang des Komparators-Verstärkers (60) und dem Halbleiterbauteil (45) angeschlossen ist, um dieses und die zugehörigen Relaisspulen (5, 6) zu sperren, wenn die Spannung am Anschlußpunkt unter die Bezugsspannung fällt.

4. Vorrichtung nach Anspruch 3,
dadurch gekennzeichnet, daß der Komparator-Verstärker (60) eine Hystereseschaltung aufweist, die zur Erhöhung des scheinbaren Potentials der Bezugsquelle (66, 67) dient, wenn nach einer Sperrung des Halbleiterbauelements (45) im Anschluß an einen Abfall der Speisespannung diese erneut ansteigt.

5. Vorrichtung nach Anspruch 4,
dadurch gekennzeichnet,
daß die Hystereseschaltung zwei Widerstände (64, 68) aufweist, von denen der eine zwischen der Bezugsquelle und dem anderen Eingang des Komparator-Verstärkers (60) geschaltet ist und von denen der andere diesen Eingang mit dem Ausgang desselben Verstärkers verbindet.

6. Vorrichtung nach einem der Ansprüche 3 bis 5,
dadurch gekennzeichnet,
daß die Steuereinrichtung (58, 71) einen Verstärker (58) aufweist, dessen Ausgang mit dem Halbleiterbauteil (45) verbunden ist, von dem ein erster Eingang an den Ausgang des Komparatur-Verstärkers (60) angeschlossen ist und von dem ein weiterer Eingang derart angeschlossen ist, daß er das vom Drehmomentengeber kommende Signal empfängt, wobei der Komparator-Verstärker auf diese Weise die Übertragung dieses Signals über den Verstärker sperren kann, wenn die Speisespannung unter einen unannehmbaren Wert abfällt.

7. Vorrichtung nach Anspruch 6,
dadurch gekennzeichnet,
daß eine Antipumpdiode (72) an den Ausgang des Verstärkers (58) der Steuereinrichtung und den Anschlußpunkt (61) des Spannungsteilers (62, 63) angeschlossen ist.

8. Vorrichtung nach einem der Ansprüche 6 und 7,
dadurch gekennzeichnet,
daß der andere Eingang des Verstärkers (58) der Steuereinrichtung an den Drehmomentengeber (7) über einen Filter (52) angeschlossen ist, der nur die Signale des Gebers passieren läßt, die eine gegebene Dauer haben.

0 088 654